# EUROPEAN PATENT SPECIFICATION

(11) **EP 3 819 810 B1**
(45) Date of publication and mention of the grant of the patent: **30.07.2025**
(21) Application number: 18931528.6
(22) Date of filing: 28.08.2018
(51) Int. Cl.: G06V 40/16, G06V 10/98, G06V 40/10, G06V 40/60, G06V 10/10

(54) **FACE RECOGNITION METHOD AND APPARATUS**
GESICHTSERKENNUNGSVERFAHREN UND -VORRICHTUNG
PROCÉDÉ ET APPAREIL DE RECONNAISSANCE FACIALE

(43) Date of publication of application: 12.05.2021
(73) Proprietor: HUAWEI TECHNOLOGIES CO., LTD., Shenzhen, Guangdong 518129 (CN)
(72) Inventor: HU, Liang, Shenzhen, Guangdong 518129 (CN); XU, Jie, Shenzhen, Guangdong 518129 (CN)
(74) Representative: Körber, Martin Hans
(86) International application number: PCT/CN2018/102680
(87) International publication number: WO 2020/041971

(56) References cited:
- CN-A- 101 771 539
- CN-A- 105 389 575
- CN-A- 106 886 697
- CN-A- 108 090 340
- CN-A- 108 319 837
- US-A1- 2014 133 713
- US-A1- 2017 169 202

## Description

### TECHNICAL FIELD

This application relates to the field of terminal technologies, and in particular, to a facial recognition method and an apparatus.

### BACKGROUND

With development of facial recognition technologies, facial recognition unlocking is gradually applied to various terminal devices. For example, when a user uses the mobile terminal, if a facial recognition result meets a preset threshold, the user obtains corresponding operation permission, for example, unlocking the mobile device, accessing an operating system with corresponding permission, or obtaining access permission for an application. Alternatively, if a facial recognition result does not meet a preset threshold, the user cannot obtain corresponding operation permission. For example, unlocking fails or access is denied. In a process of facial recognition unlocking, the user first needs to trigger a facial recognition process. A common trigger manner may be tapping a power button or another button, picking up the mobile terminal to turn on a screen, triggering the facial recognition process by using a voice assistant, or the like.

In the process of facial recognition unlocking, due to a reason such as an angle of the mobile terminal held by the user or a distance between the face and the mobile terminal, a camera may fail to collect a proper face image. This results in a face unlocking failure. After the facial recognition unlocking fails, the user needs to perform verification again. However, due to a reason such as power consumption of the existing mobile terminal, after the facial recognition fails, continual recognition is not performed. Consequently, the user needs to actively trigger facial recognition again to perform unlocking. To trigger facial recognition again, the user needs to press the power button or the another button again, pick up the mobile terminal again after putting down the mobile terminal, or send a command again by using the voice assistant. These operations are not smooth enough and are relatively complex. In addition, the facial recognition may still fail. This causes inconvenience in use.

CN 108 090 340 A provides a face recognition processing method. The method includes: triggering the intelligent terminal to perform face recognition, if face recognition fails, storing an image captured by the current face recognition, returning to the step for trigging the terminal to perform the face recognition until a first condition, a second condition and a third condition are satisfied; when the third condition is satisfied (that is to say, the face recognition succeeds), judging whether a posture cause exists in the causes causing the previous failure of the face recognition or not; if so, outputting second prompting information which is used for prompting a user to perform face recognition according to a preset posture standard later.

CN 108 319 837 A discloses a face template input method. The method includes the steps that whether or not the user's face directly faces a camera is detected; when it is detected that the user's face directly faces the camera, the direct face image of the user is collected; according to a preset image acquisition guidance strategy, at least one side face image, except the direct face image, of the user is acquired, wherein the side face images at least include the left side face image, the right side face image, the upper side face image and the lower side face image; according to the direct face image and the side face images, a face image template library of the user is generated.

US 2017/169202 A1 discloses a method for capturing biometric data. It includes calculating, by a terminal device, an angle between a surface of the terminal device and an X-axis of the terminal device. When the angle is other than ninety degrees, a prompt is displayed on the terminal device that is designed to cause a terminal device user to adjust the position of the terminal device into an optimal position. After adjusting the position of the terminal device, the terminal device calculates the angle and when the angle is ninety degrees the terminal device captures biometric data from the user.

US 2014/133713 A1 provides a method for authenticating a user. The method includes scanning a face by operating a camera to obtain a scanned facial image, and comparing the scanned facial image with a facial image registered in a storage. Even if the scanned facial image is mismatched to the registered facial image, a password/pattern is requested. If an input password/pattern matches a registered password/pattern, a device can be unlocked.

### SUMMARY

In view of this, embodiments of this application provide a facial recognition method and an apparatus, to automatically trigger facial recognition unlocking, and provide a posture adjustment prompt based on a status of a mobile terminal. This simplifies operations, improves a success rate of facial recognition, and improves use experience of a user.

The invention is defined in the independent claims. Advantageous features are defined in the dependent claims.

### BRIEF DESCRIPTION OF DRAWINGS

FIG. 1 is a schematic diagram of performing facial recognition by using a mobile phone according to an embodiment of this application;
FIG. 2 is a schematic diagram of a hardware structure of a mobile phone according to an embodiment of this application;
FIG. 3 is a flowchart of a method for triggering facial recognition according to an embodiment of this application;
FIG. 4 is a schematic diagram of a tilt angle of a mobile terminal according to an embodiment of this application;
FIG. 5 is a flowchart of a method for unlocking a mobile terminal through facial recognition according to an embodiment of this application;
FIG. 6 is a flowchart of a method for obtaining access permission for an application through facial recognition according to an embodiment of this application;
FIG. 7 is a flowchart of a method for obtaining access permission for some data through facial recognition according to an embodiment of this application;
FIG. 8 is a flowchart of a method for unlocking a mobile terminal through facial recognition according to an embodiment of this application;
FIG. 9 is a schematic diagram of unlocking a mobile terminal through facial recognition according to an embodiment of this application;
FIG. 10 is a flowchart of another method for unlocking a mobile terminal through facial recognition according to an embodiment of this application;
FIG. 11 is another schematic diagram of unlocking a mobile terminal through facial recognition according to an embodiment of this application;
FIG. 12 is a flowchart of a method for unlocking a mobile terminal through facial recognition according to an embodiment of this application;
FIG. 13 is a schematic structural diagram of an apparatus according to an embodiment of this application; and
FIG. 14 is a schematic structural diagram of another apparatus according to an embodiment of this application.

### DESCRIPTION OF EMBODIMENTS

Facial recognition is a biometric recognition technology for identity recognition based on human facial feature information. A camera of a mobile terminal may collect a picture or video including a user's face, and compare the picture or video with a pre-stored facial picture or video in terms of features. When a matching degree between the two is greater than a preset threshold, facial recognition succeeds, and then corresponding operation permission can be assigned to the user. For example, the user can unlock the mobile terminal, or access an operating system with corresponding permission, or obtain access permission for an application, or obtain access permission for some data. When the matching degree between the two is less than the preset threshold, the facial recognition fails, and the user cannot obtain corresponding operation permission. For example, unlocking fails, or access to an application or some data is denied. It may be understood that facial recognition may be alternatively performed in combination with another authentication mode, for example, password verification, gesture recognition, fingerprint recognition, iris recognition, or voiceprint recognition. During specific implementation, the facial recognition technology may be combined with some algorithms, for example, feature point extraction, 3D modeling, local magnification, automatic exposure adjustment, and infrared detection.

It may be understood that the mobile terminal in the embodiments of this application may be a mobile terminal in any form, such as a mobile phone, a tablet computer, a wearable device, a notebook computer, a personal digital assistant (PDA), an augmented reality (AR) device/a virtual reality (VR) device, or a vehicle-mounted device. In some embodiments of this application, the mobile phone is used as an example to describe the mobile terminal. It may be understood that these embodiments are also applicable to another mobile terminal.

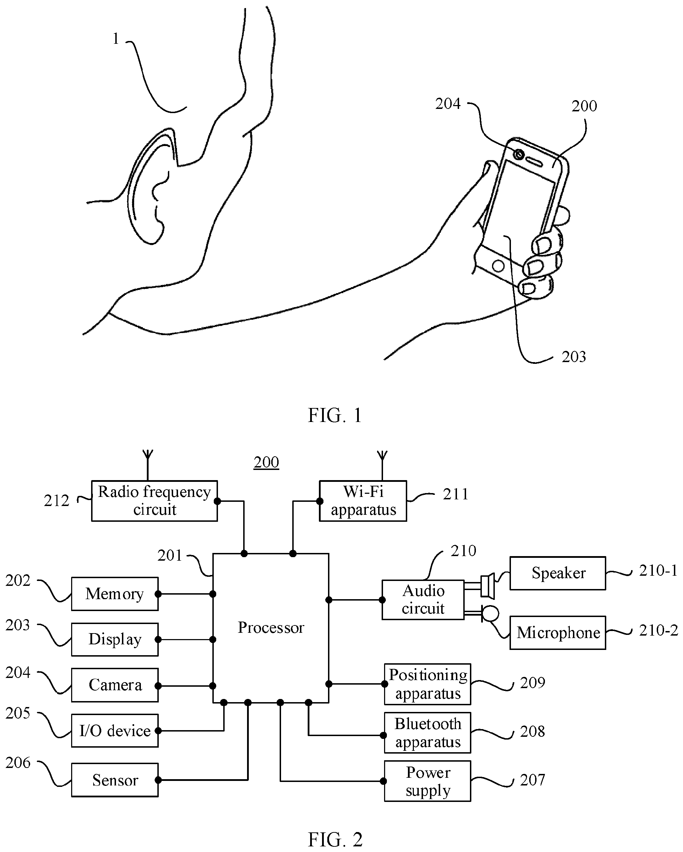

FIG. 1 is a schematic diagram of performing facial recognition by using a mobile phone. A user 1 holds a mobile phone 200 to perform facial recognition. The mobile phone 200 includes a display 203 and a camera 204. After being enabled, the camera 204 may be configured to collect a facial picture or video of the user 1. The display 203 may display a collection interface. The collection interface may be a photographing interface, and is configured to display a facial photographing effect of the user 1.

When the facial recognition is performed, the user 1 first triggers the facial recognition. There are a plurality of triggering methods. For example, the user 1 may tap a button of the mobile phone 200, including a power button, a volume button, or another button; or may touch the display 203 to light up the display 203, so as to trigger the facial recognition; or may pick up the mobile phone 200 to trigger the facial recognition through sensor detection; or may send a voice command of the facial recognition by using a voice assistant to trigger the facial recognition.

After the facial recognition is triggered, the mobile phone 200 may collect a facial image of the user 1. Specifically, the front-facing camera 204 may be used to photograph the face of the user 1. It may be understood that the facial image in the embodiments of this application may include a facial picture or video. Optionally, a collected picture or video may be displayed on the display 203. After collecting the facial image of the user 1, the mobile phone 200 may perform comparison by using a pre-stored face image, to determine whether the user 1 passes the facial recognition, so as to obtain corresponding operation permission. It may be understood that the pre-stored face image may be pre-stored in a memory of the mobile phone 200, or may be pre-stored in a server or a database capable of communicating with the mobile phone 200. The "corresponding operation permission" herein may be unlocking the mobile phone 200, or accessing an operating system with corresponding permission, or obtaining access permission for some applications, or obtaining access permission for some data, or the like. In some embodiments of this application, unlocking the mobile phone 200 is used as a result of facial recognition pass. It may be understood that in the embodiments, obtaining other corresponding operation permission may also be used as a result of the facial recognition pass. The "facial recognition pass" herein may also be referred to as facial recognition success, and means that a matching degree between the facial image of the user 1 collected by the mobile phone 200 and the pre-stored face image is greater than a preset threshold, and is not necessarily complete match. For example, the preset threshold may be that 80% feature points of the two match with each other, or the preset threshold is dynamically adjusted based on factors such as an operation place of the user 1 and permission to be obtained.

FIG. 2 is a schematic diagram of a hardware structure of the mobile phone 200. The mobile phone 200 may include a processor 201, a memory 202, the display 203, the camera 204, an I/O device 205, a sensor 206, a power supply 207, a Bluetooth apparatus 208, a positioning apparatus 209, an audio circuit 210, a Wi-Fi apparatus 211, a radio frequency circuit 212, and the like. The components communicate with each other by using one or more communications buses or signal cables. It may be understood that the mobile phone 200 is merely an example of a mobile apparatus that can implement the facial recognition, and does not constitute a limitation on a structure of the mobile phone 200. The mobile phone 200 may have more or fewer components than those shown in FIG. 2, may combine two or more components, or may have different configurations or arrangements of the components. An operating system running on the mobile phone 200 includes but is not limited to iOS^{®}, Android^{®}, Microsoft^{®}, DOS, Unix, Linux, or another operating system.

The processor 201 includes a single processor or processing unit, a plurality of processors, a plurality of processing units, or one or more other appropriately configured computing elements. For example, the processor 201 may be a microprocessor, a central processing unit (CPU), an application-specific integrated circuit (ASIC), a digital signal processor (DSP), or a combination of such devices. Optionally, the processor 201 may integrate an application processor and a modem. The application processor mainly processes an operating system, a user interface, an application, and the like. The modem mainly processes wireless communication. The processor 201 is a control center of the mobile phone 200, is directly or indirectly connected to each part of the mobile phone 200 by using various interfaces and lines, runs or executes a software program or an instruction set stored in the memory 202, and invokes data stored in the memory 202, to perform various functions of the mobile phone 200 and process data, so as to perform overall monitoring on the mobile phone 200.

The memory 202 may store electronic data that can be used by the mobile phone 200, for example, an operating system, an application, data generated by the application, various documents such as a text, a picture, an audio, and a video, a device setting and a user preference, a contact list and a communication record, a memo and a schedule, biometric measurement data, a data structure, or a database. The memory 202 may be configured as any type of memory, for example, a random access memory, a read-only memory, a flash memory, a removable memory, or a storage element of another type, or a combination of such devices. In some embodiments of this application, the memory 200 may be configured to store the preset face image, for comparing the preset face image with the collected face image during the facial recognition.

The display 203 may be configured to display information entered by the user or information provided for the user, and various interfaces of the mobile phone 200. Common display types include an LCD (liquid crystal display), an OLED (organic light-emitting diode), and the like. Optionally, the display 203 may be further integrated with a touch panel for use. The touch panel may detect whether there is contact, and detect a pressure value, a moving speed, a moving direction, location information, and the like of the contact. A detection mode of the touch panel includes but is not limited to a capacitive type, a resistive type, an infrared type, a surface acoustic wave type, and the like. After detecting a touch operation on or near the touch panel, the touch panel transmits the touch operation to the processor 201, to determine a type of a touch event. Then, the processor 201 provides corresponding visual output on the display 203 based on the type of the touch event. The visual output includes a text, a graphic, an icon, a video, and any combination thereof.

The camera 204 is configured to photograph a picture or a video. Optionally, the camera 204 may be classified into a front-facing camera and a rear-facing camera, and is used together with another component such as a flash. In some embodiments of this application, the front-facing camera may be used to collect the facial image of the user 1. In some embodiments of this application, an RGB camera, an infrared camera, a ToF (Time of Flight) camera, and a structured light component may be used to collect an image for the facial recognition.

The I/O device 205, that is, an input/output device, may receive data and an instruction sent by a user or another device, and may also output data or an instruction to the user or the another device. The I/O device 205 includes components of the mobile phone 200 such as various buttons, interfaces, a keyboard, a touch input apparatus, a touchpad, and a mouse. An I/O device in a broad sense may also include the display 203, the camera 204, the audio circuit 210, and the like shown in FIG. 2.

The mobile phone 200 may include one or more sensors 206. The sensor 206 may be configured to detect any type of attribute, including but not limited to an image, pressure, light, touch, heat, magnetism, movement, relative motion, and the like. For example, the sensor 206 may be an image sensor, a thermometer, a hygrometer, a proximity sensor, an infrared sensor, an accelerometer, an angular velocity sensor, a gravity sensor, a gyroscope, a magnetometer, or a heart rate detector. In some embodiments of this application, a distance, an angle, or a relative location between the user 1 and the mobile phone 200 may be detected by using a proximity sensor, a distance sensor, an infrared sensor, a gravity sensor, a gyroscope, or a sensor of another type.

The power supply 207 may supply power to the mobile phone 200 and a component of the mobile phone 200. The power supply 207 may be one or more rechargeable batteries, or a non-rechargeable battery, or an external power supply connected to the mobile phone 200 in a wired/wireless manner. Optionally, the power supply 207 may further include related devices such as a power management system, a fault detection system, and a power conversion system.

The Bluetooth apparatus 208 is configured to implement data exchange between the mobile phone 200 and another device by using a Bluetooth protocol. It may be understood that the mobile phone 200 may further include another short-distance communications apparatus such as an NFC apparatus.

The positioning apparatus 209 may provide geographical location information for the mobile phone 200 and an application installed on the mobile phone 200. The positioning apparatus 209 may be a positioning system such as a GPS, a BeiDou satellite navigation system, or a GLONASS. Optionally, the positioning apparatus 209 further includes an auxiliary global positioning system AGPS, and performs auxiliary positioning based on a base station or a Wi-Fi access point, or the like.

The audio circuit 210 may perform functions such as audio signal processing, input, and output, and may include a speaker 210-1, a microphone 210-2, and another audio processing apparatus.

The Wi-Fi apparatus 211 is configured to provide the mobile phone 200 with network access that complies with a Wi-Fi-related standard protocol. For example, the mobile phone 200 may access a Wi-Fi access point by using the Wi-Fi apparatus 211, to connect to a network.

The radio frequency circuit (RF, Radio Frequency) 212 may be configured to: receive and send information or receive and send a signal in a call process, convert an electrical signal into an electromagnetic signal or convert an electromagnetic signal into an electrical signal, and communicate with a communications network and another communications device by using the electromagnetic signal. A structure of the radio frequency circuit 212 includes but is not limited to: an antenna system, a radio frequency transceiver, one or more amplifiers, a tuner, one or more oscillators, a digital signal processor, a codec chip set, a SIM (Subscriber Identity Module) card, and the like. The radio frequency circuit 212 may communicate with a network and another device through wireless communication. The network is, for example, the internet, an intranet, and/or a wireless network (for example, a cellular telephone network, a wireless local area network, and/or a metropolitan area network). The wireless communication may use any type of various communications standards, protocols, and technologies, including but not limited to a global system for mobile communications, an enhanced data GSM environment, high speed downlink packet access, high speed uplink packet access, wideband code division multiple access, code division multiple access, time division multiple access, Bluetooth, wireless fidelity (for example, IEEE 802.11a, IEEE 802.11b, IEEE 802.11g, and/or IEEE 802.11n), the internet voice protocol, WiMAX, the e-mail protocol (for example, the internet message access protocol (IMAP) and/or the post office protocol (POP)), an instant messaging (for example, the extensible messaging and presence protocol (XMPP), the session initiation protocol for instant messaging and presence leveraging extensions (SIMPLE), and the instant messaging and presence service (IMPS)), and/or the short message service (SMS), or any other appropriate communication protocol, including a communications protocol that has not been developed on the filing date of this application.

Although not shown in FIG. 2, the mobile phone 200 may further include another component. Details are not described herein.

When the facial recognition is performed by using the mobile phone 200, because the user 1 holds the mobile phone 200 at different angles and distances, the mobile phone 200 may be unable to collect a proper facial image. This results in a facial recognition failure. For example, when the face of the user 1 is too close to the mobile phone 200, a facial image is incomplete. Alternatively, when the face of the user 1 is too far away from the mobile phone 200, details of a facial image cannot be recognized. Alternatively, when the mobile phone 200 held by the user 1 is excessively tilted, distortion, deformation, or a loss of a facial image occurs. Alternatively, when an environment in which the user 1 is located is too dark or too bright, exposure or contrast of a facial image exceeds a recognizable range.

Because power of the mobile phone 200 is limited, in consideration of reducing power consumption, after the facial recognition fails, the mobile phone 200 does not continually perform facial recognition again, and the user 1 needs to re-trigger the facial recognition, that is, repeat the foregoing triggering process. This causes inconvenience in operations. In addition, after the facial recognition is triggered again, the recognition may still fail.

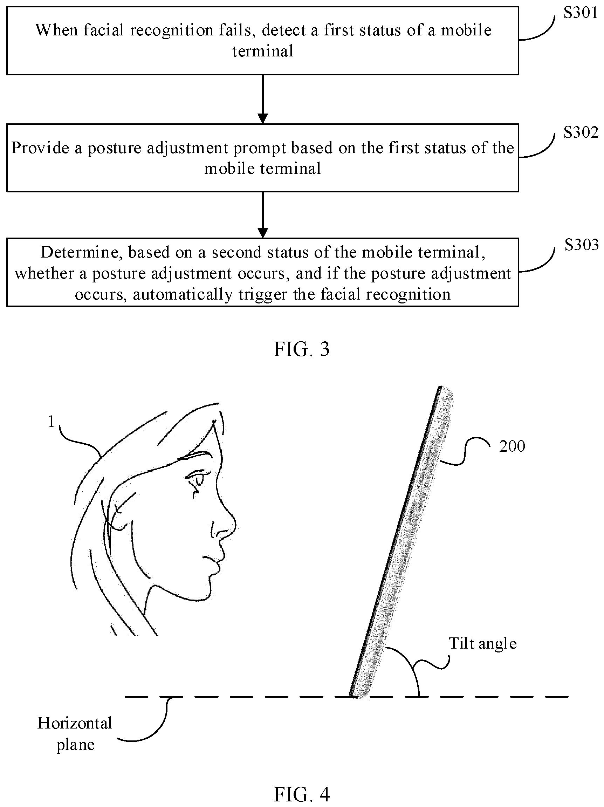

FIG. 3 shows a method for triggering facial recognition according to an embodiment of this application. The method is used to determine, after the facial recognition fails, whether a user performs posture adjustment, so as to determine whether to automatically trigger the facial recognition. The method includes the following steps.

S301: When the facial recognition fails, detect a first status of a mobile terminal.

Optionally, before step S301, step S300 (trigger the facial recognition) may be further performed. There are a plurality of triggering methods. For example, the user may tap a button of the mobile phone 200, including a power button, a volume button, or another button; or may touch the display 203 to light up the display 203, so as to trigger the facial recognition; or may pick up the mobile phone 200 to trigger the facial recognition through sensor detection; or may send a voice command of the facial recognition by using a voice assistant to trigger the facial recognition. It may be understood that S300 may be first performed before the method in the following embodiments is performed. Optionally, triggering the facial recognition may be enabling a camera and another function related to the facial recognition, to perform the facial recognition.

After the facial recognition is triggered, the mobile terminal (for example, the mobile phone 200) performs facial recognition on the user, for example, collects a facial image of the user, and compares the collected facial image with a pre-stored face image; and determines whether the user passes the facial recognition, that is, whether the facial recognition succeeds. When the facial recognition succeeds, the user may obtain corresponding permission to operate the mobile terminal, for example, unlocking the mobile terminal, accessing an operating system with corresponding permission, obtaining access permission for some applications, or obtaining access permission for some data. When the facial recognition fails, the user cannot obtain corresponding permission to operate the mobile terminal. The term "when" may be interpreted as "if", "after", "in response to determining", or "in response to detecting". It may be understood that the "when the facial recognition fails, detect a status of a mobile terminal" described herein may be detect the status of the mobile terminal at the same time when the facial recognition fails, or may be detect the status of the mobile terminal after the facial recognition fails (for example, detect the status of the mobile terminal 1 second after the facial recognition fails).

The first status of the mobile terminal may be a status of the mobile terminal when the facial recognition fails. Detecting the first status of the mobile terminal may be specifically detecting, by using a sensor, a status such as a tilt angle of the mobile terminal, a distance between the mobile terminal and the face of the user, or brightness of an environment around the mobile terminal when the facial recognition fails. It may be understood that any proper sensor may be used to detect a status of the mobile terminal, for example, a proximity sensor, a distance sensor, a gravity sensor, a gyroscope, an optical sensor, or an infrared sensor.

It should be noted that the distance between the mobile terminal and the face of the user in the embodiments of this application may be a distance between a front-facing camera of the mobile terminal and the face of the user, for example, may be a distance between the front-facing camera of the mobile phone and the nasal tip of the user. The tilt angle described in the embodiments of this application may be an angle (as shown in FIG. 4) less than or equal to 90 degrees that is in included angles formed by a plane on which a display of the mobile terminal is located relative to a horizontal plane (or a ground plane) when the user uses the mobile terminal vertically (for example, standing upright or sitting upright). It can be seen that a smaller tilt angle indicates that it is more difficult to collect an image during facial recognition. In other words, when the mobile terminal held by the user is excessively tilted, the facial recognition may fail. It may be understood that when a shape of the mobile terminal (for example, most mobile phones in the market) is a rectangular cuboid, the plane on which the display of the mobile terminal is located may also be understood as a plane on which the mobile terminal is located.

S302: Provide a posture adjustment prompt based on the first status of the mobile terminal.

After detecting the first status of the mobile terminal when the facial recognition fails, the mobile terminal provides the posture adjustment prompt based on the first status. The mobile terminal analyzes a cause of the facial recognition failure based on the first status. For example, the first status is that the mobile terminal held by the user is excessively tilted, and consequently the facial recognition fails; or the first status is that the face of the user is too close to or too far away from the mobile terminal, and consequently the facial recognition fails. After learning the cause of the facial recognition failure, the mobile terminal finds, in a preset database, a solution corresponding to the cause, to provide a corresponding posture adjustment prompt. For example, when the facial recognition fails because the face of the user is too far away from the mobile terminal, the mobile terminal may provide a posture adjustment prompt "Please move the mobile phone closer", or may provide a posture adjustment prompt "The mobile phone is too far away from the face". For another example, when the facial recognition fails because the mobile terminal held by the user is excessively tilted, the mobile terminal may provide a posture adjustment prompt "Please hold the mobile phone vertically", or may provide a posture adjustment prompt "The mobile phone is excessively tilted".

It may be understood that the posture adjustment prompt may be a prompt in any form such as a text, a picture, a voice, or a video, or a combination of these forms. For example, a display screen of the mobile terminal may display content of the posture adjustment prompt. Alternatively, a speaker plays content of the posture adjustment prompt. Alternatively, the posture adjustment prompt may be a prompt in any form such as light display or vibration of the mobile terminal, or a combination of these forms. For example, an LED indicator of the mobile terminal emits light in a specific color, or lights up or flickers for a period of time. Alternatively, the mobile terminal vibrates several times to represent a corresponding posture adjustment prompt.

In an example not covered by the claims, step S302 may be omitted, in other words, no posture adjustment prompt is provided. Step S303 is directly performed after step S301 is performed. Similarly, in the following embodiments, a step of providing a posture adjustment prompt may also be omitted.

S303: Determine, based on a second status of the mobile terminal, whether a posture adjustment occurs, and if the posture adjustment occurs, automatically trigger the facial recognition.

After the posture adjustment prompt is provided, a status of the mobile terminal (that is, the second status) may be detected again, to determine whether the posture adjustment occurs. S303 may be divided into three steps: (1) detect the second status of the mobile terminal; (2) determine, based on the second status of the mobile terminal, whether the posture adjustment occurs; and (3) if the posture adjustment occurs, automatically trigger the facial recognition. Optionally, at the same time or within a period of time after the posture adjustment is provided, the sensor may be used to detect the status of the mobile terminal again, to determine whether there is a corresponding change relative to the first status, so as to determine whether the posture adjustment occurs. From a perspective of the user, if the user performs posture adjustment, it means that the second status of the mobile terminal correspondingly changes relative to the first status. For example, if the first status of the mobile terminal is that a distance between the mobile terminal and the face of the user is 30 centimeters, the facial recognition fails because the mobile terminal is too far away. The second status is that a distance between the mobile terminal and the face of the user is 20 centimeters. Because the distance is closer, in other words, the second status correspondingly changes relative to the first status, the posture adjustment occurs.

Optionally, if the posture adjustment occurs, whether content of the posture adjustment is the same as that of the posture adjustment prompt may be further determined. If the content is the same, the facial recognition is automatically triggered again. The content of the posture adjustment prompt may be the corresponding solution obtained from the database when the cause of the facial recognition failure is analyzed in step S302. For example, when the posture adjustment prompt is "Please move the mobile phone closer", whether a posture adjustment of moving the mobile phone closer occurs may be determined based on the second status of the mobile terminal. If yes, the facial recognition is automatically triggered. For another example, when the posture adjustment prompt is "Please hold the mobile phone vertically", a posture adjustment that whether the mobile phone is held vertically may be determined based on the second status of the mobile terminal, so that the plane on which the display of the mobile phone is located is perpendicular to the horizontal plane, or an included angle between the plane on which the display is located and the horizontal plane reaches a recognizable range. If yes, the facial recognition is automatically triggered.

Automatic triggering of the facial recognition means that the user does not need to perform the method for triggering the facial recognition in S300, but the posture adjustment is used as a condition for triggering the facial recognition, so that the mobile terminal performs facial recognition again. Optionally, automatically triggering the facial recognition may be automatically enabling the front-facing camera and another function related to the facial recognition, to perform facial recognition again.

In the foregoing embodiment, the sensor detects a status change of the mobile terminal to determine whether a corresponding posture adjustment action occurs, so as to determine whether to perform facial recognition again. The facial recognition wake-up method based on the posture adjustment not only reduces power consumption of the mobile terminal, but also provides a simpler and more convenient facial recognition wake-up manner, and further improves a success rate of facial recognition by using the posture adjustment prompt.

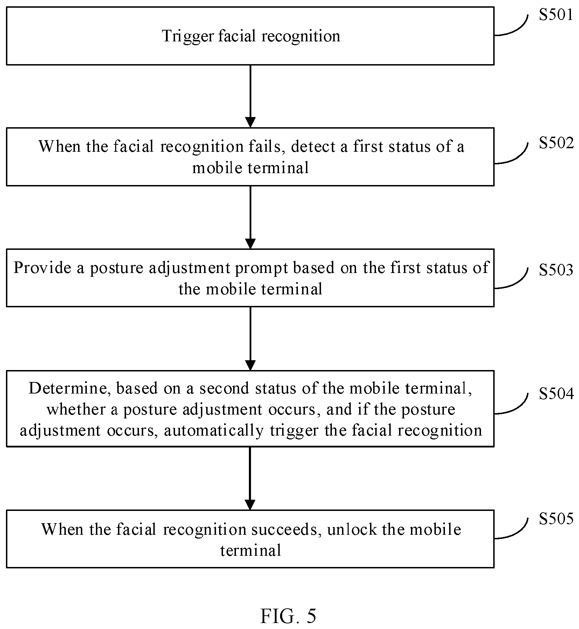

FIG. 5 shows a method for unlocking a mobile terminal through facial recognition according to an embodiment of this application. The method includes the following steps.

S501: Trigger the facial recognition. Optionally, when the facial recognition succeeds, the mobile terminal is unlocked.

S502: When the facial recognition fails, detect a first status of the mobile terminal.

S503: Provide a posture adjustment prompt based on the first status of the mobile terminal.

S504: Determine, based on a second status of the mobile terminal, whether a posture adjustment occurs, and if the posture adjustment occurs, automatically trigger the facial recognition. Similar to S303, S504 may also be divided into three steps: (1) detect the second status of the mobile terminal; (2) determine, based on the second status of the mobile terminal, whether the posture adjustment occurs; and (3) if the posture adjustment occurs, automatically trigger the facial recognition.

S505: When the facial recognition succeeds, unlock the mobile terminal.

Some steps in this embodiment are similar to those in the foregoing embodiment, and details are not described.

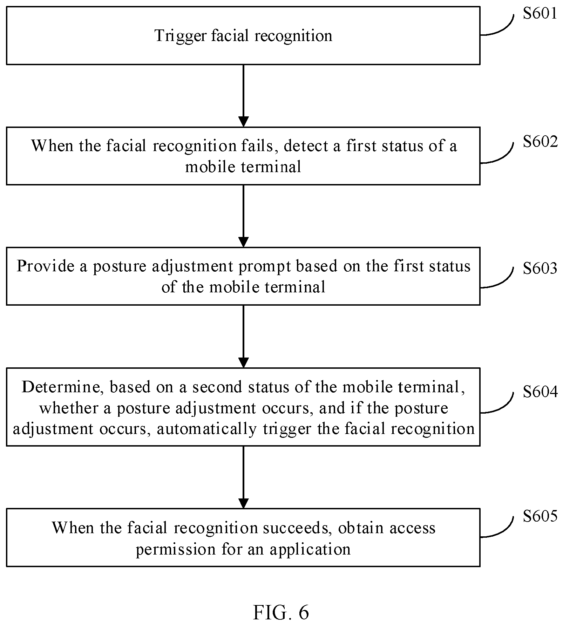

For some applications installed in the mobile phone 200, when an application is accessed, a user identity needs to be verified, to obtain access permission for the application. FIG. 6 shows a method for obtaining access permission for an application through facial recognition according to an embodiment of this application. The method includes the following steps.

S601: Trigger the facial recognition. Optionally, when the facial recognition succeeds, the access permission for the application is obtained.

S602: When the facial recognition fails, detect a first status of a mobile terminal.

S603: Provide a posture adjustment prompt based on the first status of the mobile terminal.

S604: Determine, based on a second status of the mobile terminal, whether a posture adjustment occurs, and if the posture adjustment occurs, automatically trigger the facial recognition. Similar to S303, S604 may also be divided into three steps: (1) detect the second status of the mobile terminal; (2) determine, based on the second status of the mobile terminal, whether the posture adjustment occurs; and (3) if the posture adjustment occurs, automatically trigger the facial recognition.

S605: When the facial recognition succeeds, obtain the access permission for the application.

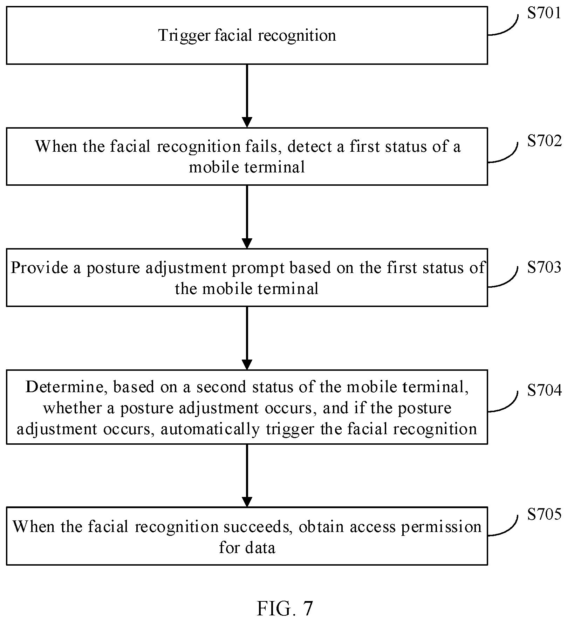

When some data (for example, a private photo or a personal memo) stored in the mobile phone 200 is accessed, a user identity needs to be verified. FIG. 7 shows a method for obtaining access permission for some data through facial recognition according to an embodiment of this application. The method includes the following steps.

S701: Trigger the facial recognition. Optionally, when the facial recognition succeeds, the access permission for the data is obtained.

S702: When the facial recognition fails, detect a first status of a mobile terminal.

S703: Provide a posture adjustment prompt based on the first status of the mobile terminal.

S704: Determine, based on a second status of the mobile terminal, whether a posture adjustment occurs, and if the posture adjustment occurs, automatically trigger the facial recognition. Similar to S303, S704 may also be divided into three steps: (1) detect the second status of the mobile terminal; (2) determine, based on the second status of the mobile terminal, whether the posture adjustment occurs; and (3) if the posture adjustment occurs, automatically trigger the facial recognition.

S705: When the facial recognition succeeds, obtain the access permission for the data.

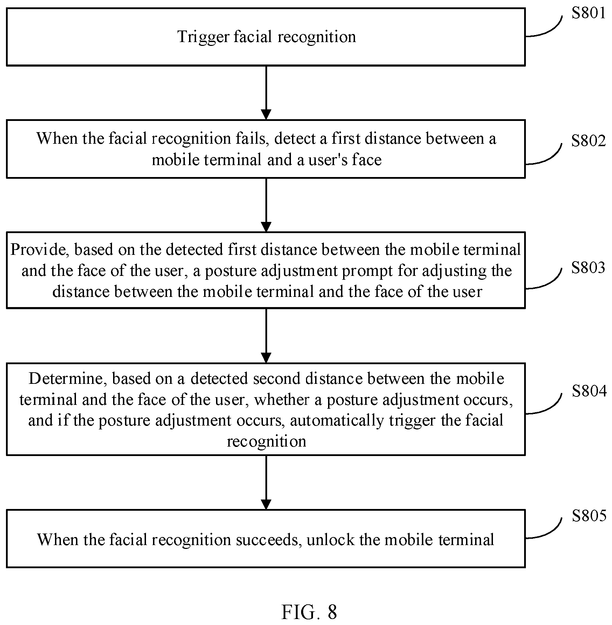

FIG. 8 shows an example of unlocking a mobile terminal through facial recognition. When the mobile terminal is too close to or too far away from a user's face, a method for automatically triggering the facial recognition includes the following steps.

S801: Trigger the facial recognition. Optionally, when the facial recognition succeeds, the mobile terminal is unlocked.

S802: When the facial recognition fails, detect a first distance between the mobile terminal and the face of the user.

A cause of the facial recognition failure may be that the mobile terminal is too close to or too far away from the face of the user.

S803: Provide, based on the detected first distance between the mobile terminal and the face of the user, a posture adjustment prompt for adjusting the distance between the mobile terminal and the face of the user.

The first distance may be a distance that is between the mobile terminal and the face of the user and that is detected by a sensor when the facial recognition fails. When the distance is too close, a gesture adjustment prompt for prolonging the distance may be provided. When the distance is too far away, a gesture adjustment prompt for shortening the distance may be provided.

S804: Determine, based on a detected second distance between the mobile terminal and the face of the user, whether a posture adjustment occurs, and if the posture adjustment occurs, automatically trigger the facial recognition.

After the mobile terminal provides the posture adjustment prompt, the sensor detects the second distance between the mobile terminal and the face of the user. The second distance is compared with the first distance. If a corresponding change occurs, it is determined that the posture adjustment occurs. For example, when the posture adjustment prompt is to prolong the distance, if the second distance is greater than the first distance, it is determined that the posture adjustment occurs. Similar to S303, S804 may also be divided into three steps: (1) detect the second distance between the mobile terminal and the face of the user; (2) determine, based on the second distance between the mobile terminal and the face of the user, whether the posture adjustment occurs; and (3) if the posture adjustment occurs, automatically trigger the facial recognition.

S805: When the facial recognition succeeds, unlock the mobile terminal.

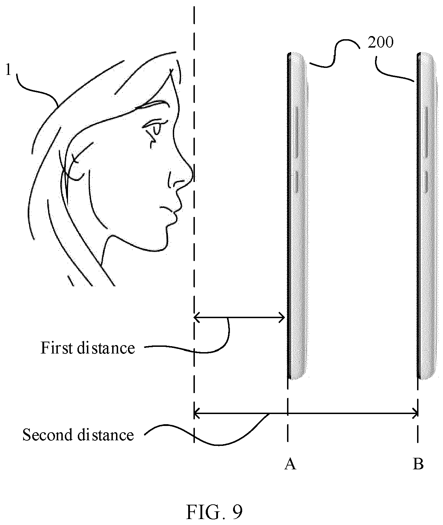

FIG. 9 is a schematic diagram of unlocking a mobile terminal through facial recognition. The user 1 triggers the facial recognition to unlock the mobile phone 200. It is assumed that the mobile phone 200 is located at a location A at the beginning. In this case, a distance between the mobile phone 200 and the face of the user 1 is a first distance. If the first distance is excessively close, for example, the first distance is 10 centimeters, the mobile phone 200 may fail to collect a proper facial image, and consequently facial recognition unlocking fails.

When the facial recognition fails, a sensor of the mobile phone 200 may detect the first distance between the mobile phone 200 and the face of the user 1. Based on the first distance, the mobile phone 200 may determine that a cause of the facial recognition failure is that the mobile phone 200 is too close to the face of the user 1, and therefore provides a posture adjustment prompt for prolonging the distance. For example, a display screen of the mobile phone 200 displays a prompt "Please move the mobile phone farther away", or a speaker is used to play a prompt "Please move the mobile phone farther away". Optionally, the step of providing the posture adjustment prompt may be omitted.

Then, the sensor of the mobile phone 200 may detect a second distance between the mobile phone 200 and the face of the user 1. Optionally, the user 1 moves the mobile phone 200 farther away based on the posture adjustment prompt. Assuming that the mobile phone 200 is located at a location B in this case, a distance between the mobile phone 200 and the face of the user 1 is the second distance. It is assumed that the second distance is 20 centimeters. Because the second distance is greater than the first distance, and meets the posture adjustment prompt for prolonging the distance, it is determined that a posture adjustment occurs. Therefore, the mobile phone 200 can enable a front-facing camera to automatically trigger the facial recognition. The facial recognition succeeds if the mobile phone 200 may collect a proper face image when the mobile phone 200 is at the second distance from the face of the user 1, and a matching degree obtained after comparison with a pre-stored face image is greater than a set threshold. When the facial recognition succeeds, the mobile phone 200 can be unlocked.

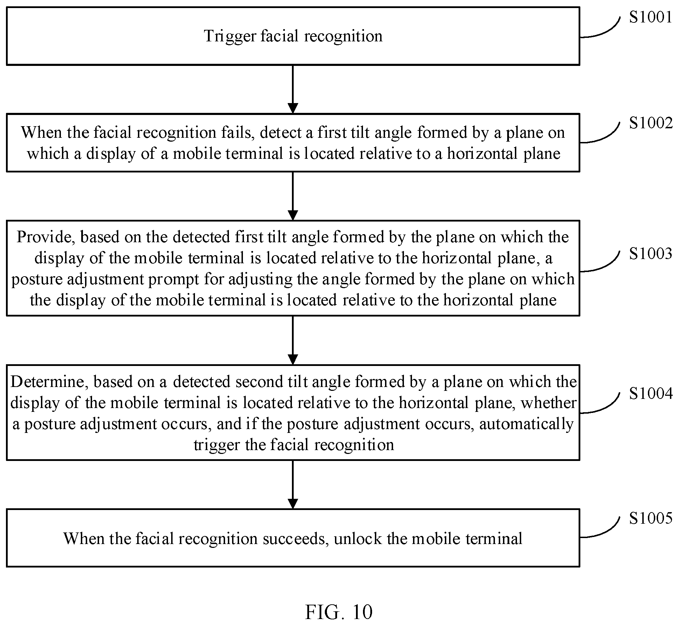

FIG. 10 shows an example of unlocking a mobile terminal through facial recognition. When the mobile terminal held by the user is excessively tilted, a method for automatically triggering the facial recognition includes the following steps.

S1001: Trigger the facial recognition. Optionally, when the facial recognition succeeds, the mobile terminal is unlocked.

S1002: When the facial recognition fails, detect a first tilt angle formed by a plane on which a display of the mobile terminal is located relative to a horizontal plane.

A possible cause of the facial recognition failure is that the tilt angle is too small. Consequently, no proper face image can be collected.

S1003: Provide, based on the detected first tilt angle formed by the plane on which the display of the mobile terminal is located relative to the horizontal plane, a posture adjustment prompt for adjusting the angle formed by the plane on which the display of the mobile terminal is located relative to the horizontal plane.

The first tilt angle may be an angle less than or equal to 90 degrees that is in included angles formed by the plane on which the display of the mobile terminal is located relative to the horizontal plane and that is detected by a sensor when the facial recognition fails.

S1004: Determine, based on a detected second tilt angle formed by a plane on which the display of the mobile terminal is located relative to the horizontal plane, whether a posture adjustment occurs, and if the posture adjustment occurs, automatically trigger the facial recognition.

After the mobile terminal provides the posture adjustment prompt, the sensor detects the second tilt angle formed by the plane on which the display of the mobile terminal is located relative to the horizontal plane. The second tilt angle is compared with the first tilt angle. If a corresponding change occurs, it is determined that the posture adjustment occurs. For example, when the posture adjustment prompt is holding the mobile phone vertically (equivalent to increasing the tilt angle), if the second tilt angle is greater than the first tilt angle, it is determined that the posture adjustment occurs.

Similar to S303, S1004 may also be divided into three steps: (1) detect the second tilt angle formed by the plane where the display of the mobile terminal is located relative to the horizontal plane; (2) determine, based on the second tilt angle formed by the plane on which the display of the mobile terminal is located relative to the horizontal plane, whether the posture adjustment occurs; and (3) if the posture adjustment occurs, automatically trigger the facial recognition.

S1005: When the facial recognition succeeds, unlock the mobile terminal.

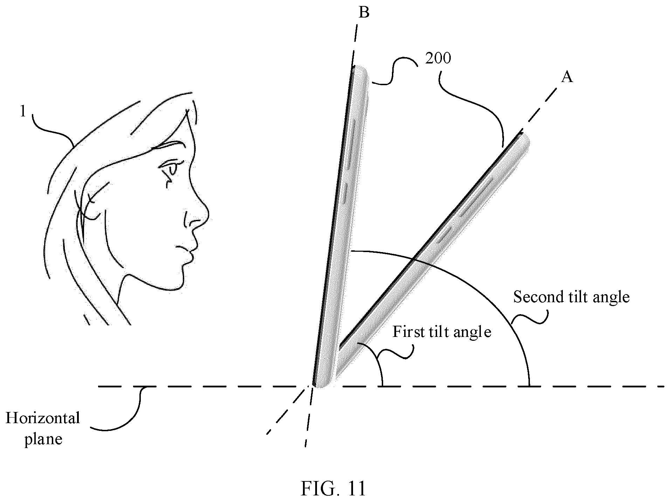

FIG. 11 is a schematic diagram of unlocking a mobile terminal through facial recognition. The user 1 triggers the facial recognition to unlock the mobile phone 200. It is assumed that the mobile phone 200 is located at a location A at the beginning. In this case, an angle formed by a plane on which a display of the mobile phone 200 is located relative to a horizontal plane is a first tilt angle. If the mobile phone 200 is excessively tilted, that is, the first tilt angle is excessively small, for example, the first tilt angle is 40 degrees, the mobile phone 200 may fail to collect a proper facial image. Consequently, facial recognition unlocking fails.

When the facial recognition fails, a sensor of the mobile phone 200 may detect the first tilt angle formed by the plane on which the display of the mobile phone 200 is located relative to the horizontal plane. Based on the first tilt angle, the mobile phone 200 may determine that a cause of the facial recognition failure is that the first tilt angle formed by the plane on which the display of the mobile phone 200 is located relative to the horizontal plane is excessively small, and therefore provides a posture adjustment prompt for increasing the tilt angle. For example, a display screen of the mobile phone 200 displays a prompt "Please hold the mobile phone vertically", or a speaker is used to play a prompt "Please hold the mobile phone vertically". Optionally, the step of providing the posture adjustment prompt may be omitted.

Then, the sensor of the mobile phone 200 may detect a second tilt angle formed by a plane on which the display of the mobile phone 200 is located relative to the horizontal plane. Optionally, the user 1 adjusts the tilt angle of the mobile phone 200 based on the posture adjustment prompt. Assuming that the mobile phone 200 is located at a location B in this case, an angle formed by the plane on which the display of the mobile phone 200 is located relative to the horizontal plane is the second tilt angle. It is assumed that the second tilt angle is 80 degrees. Because the second tilt angle is greater than the first tilt angle, and meets the posture adjustment prompt for increasing the tilt angle, it is determined that a posture adjustment occurs. Therefore, the mobile phone 200 can enable a front-facing camera to automatically trigger the facial recognition. If a proper face image can be collected when the second tilt angle is formed by the plane on which the display of the mobile phone 200 is located relative to the horizontal plane, and a matching degree obtained after comparison with a pre-stored face image is greater than a set threshold, the facial recognition succeeds. When the facial recognition succeeds, the mobile phone 200 can be unlocked.

It may be understood that, when the facial recognition fails, both the first distance between the mobile terminal and the face of the user, and the first tilt angle formed by the plane on which the display of the mobile terminal is located relative to the horizontal plane may be alternatively detected. Then, a posture adjustment prompt for adjusting both the distance and the tilt angle is provided. Whether a posture adjustment occurs is determined based on the detected second distance between the mobile terminal and the face of the user, and the detected second tilt angle formed by the plane on which the display of the mobile terminal is located relative to the horizontal plane. If the posture adjustment occurs, the facial recognition is automatically triggered. When the facial recognition succeeds, the mobile terminal is unlocked.

It may be understood that in the foregoing embodiments, the facial recognition may be used in combination with another authentication mode, for example, password verification, gesture recognition, fingerprint recognition, iris recognition, or voiceprint recognition. For example, when a quantity of failures of unlocking the mobile terminal by using the facial recognition reaches a specific threshold (for example, three times), the another authentication mode may be used to unlock the mobile terminal.

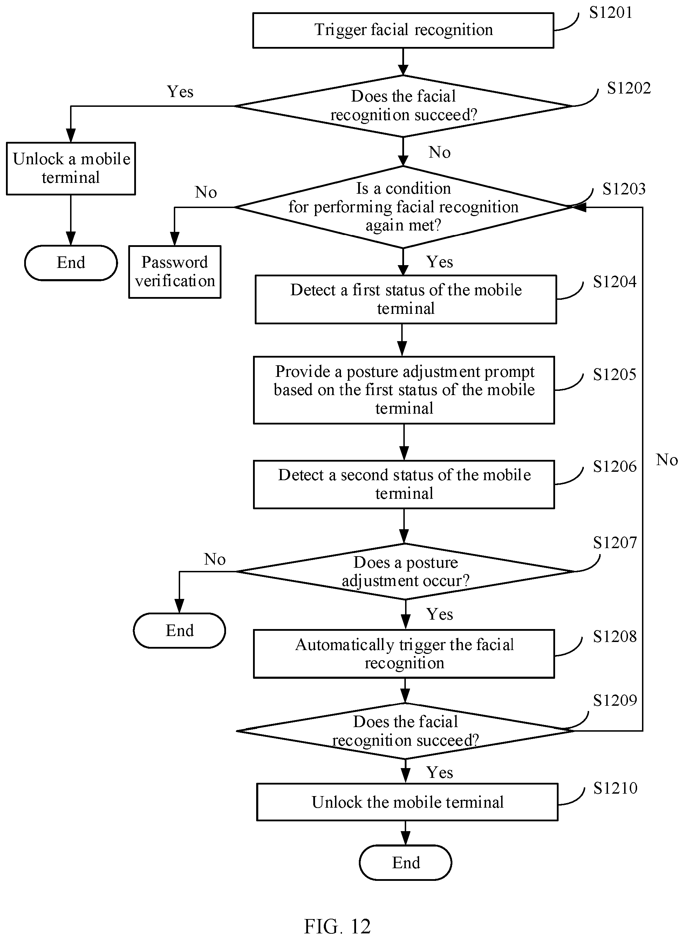

FIG. 12 is a schematic diagram of unlocking a mobile terminal through facial recognition, including the following steps.

S1201: Trigger the facial recognition.

S1202: Determine whether the facial recognition succeeds. Optionally, when the facial recognition succeeds, the mobile terminal is unlocked. The procedure ends.

S1203: When the facial recognition fails, determine whether a condition for performing facial recognition again is met. Optionally, that the condition for performing facial recognition again is met is that a quantity of facial recognition failures is less than a preset threshold. For example, if the preset threshold is three times, it is determined whether a quantity of times of the facial recognition is less than three times. If yes, S1204 is performed. If the quantity of times is greater than or equal to three times, the condition for performing facial recognition again is not met. If the condition for performing facial recognition again is not met, the procedure ends, or another unlocking mode is used, for example, password verification.

S1204: If the condition for performing facial recognition again is met, detect a first status of the mobile terminal. The first status may be a first distance between the mobile terminal and a user's face, or a first tilt angle formed by a plane on which a display of the mobile terminal is located relative to a horizontal plane, or the like when the facial recognition fails. The mobile terminal may detect the first status of the mobile terminal by using any proper sensor.

S1205: Provide a posture adjustment prompt based on the first status of the mobile terminal.

S1206: Detect a second status of the mobile terminal.

S1207: Determine, based on the second status of the mobile terminal, whether a posture adjustment occurs. If the posture adjustment does not occur, the procedure ends.

S1208: If the posture adjustment occurs, automatically trigger the facial recognition.

S1209: When the facial recognition succeeds, unlock the mobile terminal. The procedure ends. When the facial recognition still fails, go back to S1203, and continue to determine whether the condition for performing facial recognition again is met.

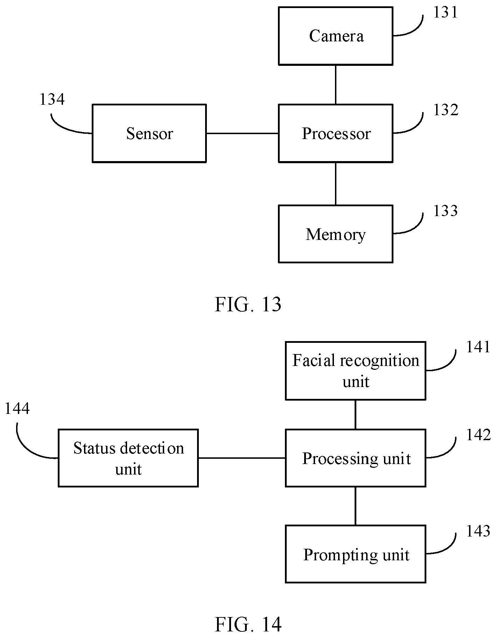

Referring to FIG. 13, an embodiment of this application provides an apparatus, including a camera 131, a processor 132, a memory 133, and a sensor 134. After a user triggers facial recognition, the processor 132 instructs the camera 131 to collect a facial image of the user, and compare the facial image with a face image pre-stored in the memory 133. The processor 132 determines a matching degree between the collected image and the pre-stored image. When the matching degree is greater than a preset threshold, the processor 132 determines that the facial recognition succeeds, and grants corresponding operation permission to the user. When the matching degree is less than the preset threshold, the processor 132 determines that the facial recognition fails, and does not grant the corresponding operation permission to the user.

When the facial recognition fails, the processor 132 instructs the sensor 134 to detect a first status of the apparatus. The first status may be a status of the apparatus when the facial recognition fails. Specifically, a tilt angle of the apparatus, a distance between the apparatus and the face of the user, or the like may be detected. The processor 132 provides a posture adjustment prompt based on the first status. The posture adjustment prompt may be output to the user by using a component such as a display or a speaker.

After providing the posture adjustment prompt, the processor 132 instructs the sensor 134 to detect a second status of the apparatus, to determine whether a posture adjustment occurs. If determining that the posture adjustment occurs, the processor 132 triggers the facial recognition.

For a specific implementation, refer to the foregoing method embodiments, and details are not described herein.

In addition, an embodiment of this application provides an apparatus, including a processor, a memory, and one or more programs. The one or more programs are stored in the memory, and are configured to be executed by the one or more processors. The one or more programs include an instruction. The instruction is used to: when facial recognition fails, detect a first status of the apparatus; provide a posture adjustment prompt based on the first status; and determine, based on a second status, whether a posture adjustment occurs, and if the posture adjustment occurs, automatically trigger the facial recognition. For a specific implementation, refer to the foregoing method embodiments.

In addition, an embodiment of this application provides a storage medium or a computer program product, configured to store a computer software instruction. The instruction is used to: when facial recognition fails, detect a first status of a mobile terminal; provide a posture adjustment prompt based on the first status of the mobile terminal; and determine, based on a second status of the mobile terminal, whether a posture adjustment occurs, and if the posture adjustment occurs, automatically trigger the facial recognition. For a specific implementation, refer to the foregoing method embodiments.

In addition, referring to FIG. 14, an embodiment of this application provides an apparatus, including a facial recognition unit 141, a processing unit 142, a prompting unit 143, and a status detection unit 144.

After a user triggers facial recognition, the facial recognition unit 141 may collect a facial image of the user, and compare the facial image with a pre-stored face image. The processing unit 142 determines a matching degree between the collected image and the pre-stored image. When the matching degree is greater than a preset threshold, the processing unit 142 determines that the facial recognition succeeds, and grants corresponding operation permission to the user. When the matching degree is less than the preset threshold, the processing unit 142 determines that the facial recognition fails, and does not grant the corresponding operation permission to the user.

When the facial recognition fails, the status detection unit 144 detects a first status of the apparatus. The first status may be a status of the apparatus when the facial recognition fails. Specifically, a tilt angle of the apparatus, a distance between the apparatus and the face of the user, or the like may be detected. The prompting unit 143 provides a posture adjustment prompt based on the first status. The posture adjustment prompt may be output to the user by using a component such as a display or a speaker.

After the posture adjustment prompt is provided, the status detection unit 144 detects a second status of the apparatus, to determine whether a posture adjustment occurs. If it is determined that the posture adjustment occurs, the facial recognition unit 141 automatically triggers the facial recognition.

For a specific implementation, refer to the foregoing method embodiments.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of this application. The foregoing storage medium includes: any medium that can store program code, such as a USB flash drive, a removable hard disk, a read-only memory (read only memory, ROM), a random access memory (random access memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A facial recognition method, comprising:
triggering facial recognition (S501);
when the facial recognition fails, detecting (S501) a first status of a mobile terminal, wherein the first status includes a tilt angle of the mobile terminal, or a distance between the mobile terminal and the face of the user, or a brightness of an environment around the mobile terminal;
providing a posture adjustment prompt (S503) based on the first status,
wherein the providing a posture adjustment prompt based on the first status comprises:
analyzing, by the mobile terminal, a cause of the facial recognition failure based on the first status, finding, in a preset database, a solution corresponding to the cause, and providing the posture adjustment prompt based on the solution;
detecting a second status of the mobile terminal and the corresponding changes relative to the first status, wherein the second status includes a second tilt angle of the mobile terminal, or a second distance between the mobile terminal and the face of the user, or a second brightness of an environment around the mobile terminal; and
determining, based on the second status, whether a posture adjustment occurs, wherein the determining, based on the second status, whether a posture adjustment occurs comprises:
determining whether a change of the second status relative to the first status is the same as content of the posture adjustment prompt; and
if the posture adjustment occurs, automatically triggering the facial recognition (504).

2. The method according to claim 1, wherein the triggering facial recognition comprises:
collecting a facial image of a user, and comparing the facial image with a pre-stored facial image.

3. The method according to claim 2, wherein the facial image comprises a facial picture or video.

4. The method according to claim 2, wherein the pre-stored facial image is stored in a memory of the mobile terminal, or stored in a server capable of communicating with the mobile terminal.

5. The method according to any one of claims 1 to 4, wherein after the automatically triggering the facial recognition, the method further comprises:
when the facial recognition succeeds, obtaining (S505, S605, S705) operation permission of the mobile terminal.

6. The method according to claim 5, wherein the obtaining operation permission of the mobile terminal comprises any one of the following:
unlocking (S505) the mobile terminal, obtaining (S605) access permission for an application installed on the mobile terminal, or obtaining (S705) access permission for data stored on the mobile terminal.

7. The method according to any one of claims 1 to 4, wherein after the automatically triggering the facial recognition, the method further comprises:
when the facial recognition fails (S1209), performing verification in any one of the following authentication modes: password verification, gesture recognition, fingerprint recognition, iris recognition, and voiceprint recognition.

8. The method according to any one of claims 1 to 4, wherein after the automatically triggering the facial recognition, the method further comprises:
when the facial recognition fails (S1209), determining whether a condition for performing facial recognition again is met (S1203); and
if the condition for performing facial recognition again is met, automatically triggering facial recognition again (S1208); or
if the condition for performing facial recognition again is not met, performing verification in any one of the following authentication modes: password verification, gesture recognition, fingerprint recognition, iris recognition, and voiceprint recognition.

9. The method according to claim 8, wherein the condition for performing facial recognition again comprises: a quantity of facial recognition failures is less than a preset threshold.

10. The method according to any one of claims 1 to 9, wherein the posture adjustment prompt comprises any combination of the following prompt modes:
a text, a picture, a voice, a video, light, or vibration.

11. The method according to any one of claims 1 to 10, wherein
the first status is a first tilt angle of a plane on which a display of the mobile terminal is located relative to a horizontal plane when the facial recognition fails, and the second status is a second tilt angle of a plane on which the display of the mobile terminal is located relative to the horizontal plane after the posture adjustment prompt is provided.

12. An apparatus, comprising a camera (131), a processor (132), a memory (133), and a sensor (134), wherein
the processor is configured to perform the method of claims 1-11, and the sensor includes a proximity sensor, a distance sensor, a gravity sensor, a gyroscope, an optical sensor, or an infrared sensor.

## Patentansprüche

1. Gesichtserkennungsverfahren, umfassend:
Auslösen von Gesichtserkennung (S501);
wenn die Gesichtserkennung fehlschlägt, Detektieren (S501) eines ersten Status eines mobilen Endgeräts, wobei der erste Status einen Neigungswinkel des mobilen Endgeräts oder eine Entfernung zwischen dem mobilen Endgerät und der Fläche des Benutzers oder eine Helligkeit einer Umgebung um das mobile Endgerät beinhaltet;
Bereitstellen einer Haltungsanpassungsaufforderung (S503) basierend auf dem ersten Status,
wobei das Bereitstellen einer Haltungsanpassungsaufforderung basierend auf dem ersten Status Folgendes umfasst:
Analysieren einer Ursache für das Fehlschlagen der Gesichtserkennung basierend auf dem ersten Status durch das mobile Endgerät, Finden einer Lösung, die der Ursache entspricht, in einer voreingestellten Datenbank und Bereitstellen der Haltungsanpassungsaufforderung basierend auf der Lösung;
Detektieren eines zweiten Status des mobilen Endgeräts und der entsprechenden Änderungen in Bezug auf den ersten Status, wobei der zweite Status einen zweiten Neigungswinkel des mobilen Endgeräts oder eine zweite Entfernung zwischen dem mobilen Endgerät und der Fläche des Benutzers oder eine zweite Helligkeit einer Umgebung um das mobile Endgerät beinhaltet; und Bestimmen basierend auf dem zweiten Status, ob eine Haltungsanpassung erfolgt, wobei das Bestimmen basierend auf dem zweiten Status, ob eine Haltungsanpassung erfolgt, Folgendes umfasst:
Bestimmen, ob eine Änderung des zweiten Status in Bezug auf den ersten Status mit dem Inhalt der Haltungsanpassungsaufforderung übereinstimmt; und
wenn die Haltungsanpassung erfolgt, automatisches Auslösen der Gesichtserkennung (504).

2. Verfahren nach Anspruch 1, wobei die auslösende Gesichtserkennung Folgendes umfasst:
Sammeln eines Gesichtsbildes eines Benutzers und Vergleichen des Gesichtsbildes mit einem vorspeicherten Gesichtsbild.

3. Verfahren nach Anspruch 2, wobei das Gesichtsbild ein Gesichtsbild oder -video umfasst.

4. Verfahren nach Anspruch 2, wobei das vorgespeicherte Bild in einem Speicher des mobilen Endgeräts gespeichert ist oder in einem Server gespeichert ist, der in der Lage ist, mit dem mobilen Endgerät zu kommunizieren.

5. Verfahren nach einem der Ansprüche 1 bis 4, wobei das Verfahren nach dem automatischen Auslösen der Gesichtserkennung ferner Folgendes umfasst:
wenn die Gesichtserkennung erfolgreich ist, Erlangen (S505, S605, S705) einer Vorgangsgenehmigung des mobilen Endgeräts.

6. Verfahren nach Anspruch 5, wobei das Erlangen einer Vorgangsgenehmigung des mobilen Endgeräts eines von Folgendem umfasst:
Entsperren (S505) des mobilen Endgeräts, Erlangen (S605) einer Zugriffsgenehmigung für eine auf dem mobilen Endgerät installierte Anwendung oder Erlangen (S705) einer Zugriffsberechtigung für auf dem mobilen Endgerät gespeicherte Daten.

7. Verfahren nach einem der Ansprüche 1 bis 4, wobei das Verfahren nach dem automatischen Auslösen der Gesichtserkennung ferner Folgendes umfasst:
wenn die Gesichtserkennung fehlschlägt (S1209), Durchführen einer Verifizierung in einem der folgenden Authentifizierungsmodi: Passwortverifizierung, Gestenerkennung, Fingerabdruckerkennung, Iriserkennung und Stimmabdruckerkennung.

8. Verfahren nach einem der Ansprüche 1 bis 4, wobei das Verfahren nach dem automatischen Auslösen der Gesichtserkennung ferner Folgendes umfasst:
wenn die Gesichtserkennung fehlschlägt (S1209), Bestimmen, ob eine Bedingung zum erneuten Durchführen der Gesichtserkennung erfüllt ist (S1203); und
wenn die Bedingung zum erneuten Durchführen der Gesichtserkennung erfüllt ist, automatisches Auslösen der Gesichtserkennung (S1208); oder
wenn die Bedingung zum erneuten Durchführen der Gesichtserkennung nicht erfüllt ist, Durchführen einer Verifizierung in einem der folgenden Authentifizierungsmodi: Passwortverifizierung, Gestenerkennung, Fingerabdruckerkennung, Iriserkennung und Stimmabdruckerkennung.

9. Verfahren nach Anspruch 8, wobei die Bedingung zum erneuten Durchführen der Gesichtserkennung Folgendes umfasst: eine Anzahl von Fehlschlägen der Gesichtserkennung ist geringer als ein voreingestellter Schwellenwert.

10. Verfahren nach einem der Ansprüche 1 bis 9, wobei die Haltungsanpassungsaufforderung eine beliebige Kombination der folgenden Aufforderungsmodi umfasst:
einen Text, ein Bild, eine Stimme, ein Video, Licht oder Vibration.

11. Verfahren nach einem der Ansprüche 1 bis 10, wobei
der erste Status ein erster Neigungswinkel einer Ebene ist, auf der sich eine Anzeige des mobilen Endgeräts in Bezug auf eine horizontale Ebene befindet, wenn die Gesichtserkennung fehlschlägt, und der zweite Status ein zweiter Neigungswinkel einer Ebene ist, auf der sich die Anzeige des mobilen Endgeräts in Bezug auf die horizontale Ebene befindet, nachdem die Haltungsanpassungsaufforderung bereitgestellt wird.

12. Vorrichtung, umfassend eine Kamera (131), einen Prozessor (132), einen Speicher (133) und einen Sensor (134), wobei
der Prozessor dazu konfiguriert ist, das Verfahren nach den Ansprüchen 1-11 durchzuführen, und der Sensor einen Näherungssensor, einen Entfernungssensor, einen Schwerkraftsensor, ein Gyroskop, einen optischen Sensor oder einen Infrarotsensor beinhaltet.

## Revendications

1. Procédé de reconnaissance faciale, comprenant :
le déclenchement d'une reconnaissance faciale (S501) ;
lorsque la reconnaissance faciale échoue, la détection (S501) d'un premier état d'un terminal mobile, dans lequel le premier état comporte un angle d'inclinaison du terminal mobile, ou une distance entre le terminal mobile et le visage de l'utilisateur, ou une luminosité d'un environnement autour du terminal mobile ; la fourniture d'une invite d'ajustement de posture (S503) sur la base du premier état,
dans lequel la fourniture d'une invite d'ajustement de posture sur la base du premier état comprend :
l'analyse, par le terminal mobile, d'une cause de l'échec de la reconnaissance faciale sur la base du premier état, le fait de trouver, dans une base de données prédéfinie, une solution correspondant à la cause, et la fourniture de l'invite d'ajustement de posture sur la base de la solution ;
la détection d'un second état du terminal mobile et des changements correspondants par rapport au premier état, dans lequel le second état comporte un second angle d'inclinaison du terminal mobile, ou une seconde distance entre le terminal mobile et le visage de l'utilisateur, ou une seconde luminosité d'un environnement autour du terminal mobile ; et
le fait de déterminer, sur la base du second état, si un ajustement de posture se produit, dans lequel le fait de déterminer, sur la base du second état, si un ajustement de posture se produit comprend :
le fait de déterminer si un changement du second état par rapport au premier état est le même que le contenu de l'invite d'ajustement de posture ; et
si l'ajustement de posture se produit, le déclenchement automatique de la reconnaissance faciale (504).

2. Procédé selon la revendication 1, dans lequel le déclenchement de la reconnaissance faciale comprend :
la collecte d'une image faciale d'un utilisateur et la comparaison de l'image faciale avec une image faciale pré-stockée.

3. Procédé selon la revendication 2, dans lequel l'image faciale comprend une photo ou une vidéo faciale.

4. Procédé selon la revendication 2, dans lequel l'image faciale pré-stockée est stockée dans une mémoire du terminal mobile, ou stockée dans un serveur capable de communiquer avec le terminal mobile.

5. Procédé selon l'une quelconque des revendications 1 à 4, dans lequel après le déclenchement automatique de la reconnaissance faciale, le procédé comprend également :
lorsque la reconnaissance faciale réussit, l'obtention (S505, S605, S705) de l'autorisation de fonctionnement du terminal mobile.

6. Procédé selon la revendication 5, dans lequel l'obtention de l'autorisation de fonctionnement du terminal mobile comprend l'une quelconque des opérations suivantes :
le déverrouillage (S505) du terminal mobile, l'obtention (S605) d'une autorisation d'accès pour une application installée sur le terminal mobile, ou l'obtention (S705) d'une autorisation d'accès pour des données stockées sur le terminal mobile.

7. Procédé selon l'une quelconque des revendications 1 à 4, dans lequel après le déclenchement automatique de la reconnaissance faciale, le procédé comprend également :
lorsque la reconnaissance faciale échoue (S1209), la réalisation d'une vérification dans l'un quelconque des modes d'authentification suivants : vérification du mot de passe, reconnaissance gestuelle, reconnaissance des empreintes digitales, reconnaissance de l'iris et reconnaissance de l'empreinte vocale.

8. Procédé selon l'une quelconque des revendications 1 à 4, dans lequel après le déclenchement automatique de la reconnaissance faciale, le procédé comprend également :
lorsque la reconnaissance faciale échoue (S1209), le fait de déterminer si une condition pour la réalisation une nouvelle fois de la reconnaissance faciale est satisfaite (S1203) ; et
si la condition pour la réalisation une nouvelle fois de la reconnaissance faciale est satisfaite, le déclenchement automatique une nouvelle fois de la reconnaissance faciale (S1208) ; ou
si la condition pour la réalisation une nouvelle fois de la reconnaissance faciale n'est pas satisfaite, la réalisation d'une vérification dans l'un quelconque des modes d'authentification suivants : vérification du mot de passe, reconnaissance gestuelle, reconnaissance des empreintes digitales, reconnaissance de l'iris et reconnaissance de l'empreinte vocale.

9. Procédé selon la revendication 8, dans lequel la condition pour la réalisation une nouvelle fois de la reconnaissance faciale comprend : une quantité d'échecs de reconnaissance faciale est inférieure à un seuil prédéfini.

10. Procédé selon l'une quelconque des revendications 1 à 9, dans lequel l'invite d'ajustement de posture comprend une quelconque combinaison des modes d'invite suivants :
un texte, une image, une voix, une vidéo, une lumière ou une vibration.

11. Procédé selon l'une quelconque des revendications 1 à 10, dans lequel
le premier état est un premier angle d'inclinaison d'un plan sur lequel un écran du terminal mobile est situé par rapport à un plan horizontal lorsque la reconnaissance faciale échoue, et le second état est un second angle d'inclinaison d'un plan sur lequel l'écran du terminal mobile est situé par rapport au plan horizontal après que l'invite d'ajustement de posture est fournie.

12. Appareil, comprenant une caméra (131), un processeur (132), une mémoire (133) et un capteur (134), dans lequel
le processeur est configuré pour exécuter le procédé selon les revendications 1 à 11, et le capteur comporte un capteur de proximité, un capteur de distance, un capteur de gravité, un gyroscope, un capteur optique ou un capteur infrarouge.
